(19)

Europäisches
Patentamt
European
Patent Office
Office européen
des brevets

(11) **EP 4 550 521 A2**

(12) **EUROPEAN PATENT APPLICATION**

(43) Date of publication:
**07.05.2025 Bulletin 2025/19**

(21) Application number: **24200511.4**

(22) Date of filing: **16.09.2024**

(51) International Patent Classification (IPC):
**H01M 10/48** (2006.01)   **H01M 10/633** (2014.01)
**H01M 10/66** (2014.01)

(52) Cooperative Patent Classification (CPC):
**H01M 10/486; H01M 10/48; H01M 10/633;
H01M 10/66;** H01M 10/613

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **03.11.2023   IN 202321075179**

(71) Applicant: **Tata Consultancy Services Limited
Maharashtra (IN)**

(72) Inventors:
• **RAMANUJAM, Muralikrishnan
411057 Maharashtra (IN)**
• **RUNKANA, Venkataramana
411013 Manharashtra (IN)**
• **VUPPALA, Vijaykumar Reddy
411057 Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM OF PREDICTING TEMPERATURE DISTRIBUTION IN A BATTERY PACK**

(57)   For effective monitoring of battery health, it is important that the temperature characteristics of the battery are monitored. However, in certain battery pack designs, the number of batteries in the stack can be high, so sensors for measurement will not be able to monitor all the batteries in the stack. Existing battery monitoring approaches fail to tackle this problem. The disclosure herein generally relates to battery monitoring, and, more particularly, to method and system of predicting temperature distribution in a battery pack. In this approach, the system calculates a lumped conductance value for a battery pack being monitored, and in turn uses the value of the lumped conductance to predict a temperature distribution value in the battery, which is indicative of health of the battery pack.

obtaining, via one or more hardware processors, a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack — 202

preprocessing, via the one or more hardware processors, the obtained battery data to generate a pre-processed data — 204

determining, via the one or more hardware processors, a) a heat transfer rate between a liquid coolant and the battery pack, wherein the heat generation rates within the battery stack are non-uniform, and b) value of a heat flux jump by considering an adiabatic region where the liquid coolant flows through a region in which there is no heat exchange heat with the battery pack due to a serpentine geometry of the battery pack — 206

200

**FIG. 2**

**EP 4 550 521 A2**

# EP 4 550 521 A2

**Description**

CROSS-REFERENCE TO RELATED APPLICATIONS AND PRIORITY

The present application claims priority to Indian application no. 202321075179, filed on November 3, 2023.

TECHNICAL FIELD

The disclosure herein generally relates to battery monitoring, and, more particularly, to method and system of predicting temperature distribution in a battery pack.

BACKGROUND

Electric vehicles (EV) and hybrid electric vehicles (HEV) are getting importance due to the pollution caused by fossil fuel vehicles and the need for clean energy sources in cities. The battery pack in the electric vehicle forms an important part (40% of the cost of the vehicles). A battery management system (BMS) performs the basic tasks of charging the battery pack in the vehicle and monitoring the important functions in the battery like current, voltage and temperature so that the battery does not catch fire (thermal runaway), undercharge or degrade soon.

With battery systems getting more common it is important to augment the capabilities of the BMS system by enhancing the life and the energy density in the battery. Current, voltage and temperature recorded in the battery pack could be used to understand more about the behavior of the battery and optimize the use of the pack to enhance energy efficiency there by decreasing the overall running costs and battery recycling costs. Digital twin is an efficient way to model the behavior of a real battery pack in a virtual environment and use the insights gained from the twin to optimize and predict future trends. A typical digital twin inside an electric vehicle consists of modules to predict state of charge (SoC) and state of health (SoH) of the battery pack. The state of the health of a battery has a strong dependence on its temperature. The ideal operating range for the battery pack is between 25 C to 35 C. At higher temperatures above that limit, the capacity of the battery degrades faster and reduces the life of the battery. To meet the power requirements for an electric vehicle, several batteries are arranged in stack in series and parallel electrical connections. Since batteries generate heat during charging and discharging, the battery pack is cooled by air or liquid by forcing them to flow next to the batteries to maintain the temperature of the battery pack within the operating range. The heat generated by the batteries is transferred to the coolant and the type and the flow rate of coolant play an important role in maintaining the battery temperature.

Cooling battery packs with air is easier to design as air is readily available and the cost of the system is lower. But air has lower thermal capacity (density*specific heat) and so the volumetric flow rate of air required to cool battery pack in an electric vehicle needs to be much higher and provides design challenges for pumps to be used for efficient thermal management. Liquid coolants (water and ethylene glycol) that have high thermal capacity require low volumetric flow rates are preferred for cooling electric vehicle battery packs.

For effective monitoring of battery health, it is important that the temperature characteristics of the battery are monitored. However, in certain battery pack designs, the number batteries in the stack can be high, so sensors for measurement will not be able to monitor all the batteries in the stack. Existing battery monitoring approaches fail to tackle this problem.

SUMMARY

Embodiments of the present disclosure present technological improvements as solutions to one or more of the above-mentioned technical problems recognized by the inventors in conventional systems. For example, in one embodiment, a processor implemented method is provided. The method includes obtaining, via one or more hardware processors, a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack. Further, the obtained battery data is preprocessed, via the one or more hardware processors, to generate a pre-processed data. Further, a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, are determined, via the one or more hardware processors, wherein determining the heat transfer rate and the value of the heat flux jump includes the following steps. Initially, information on a preliminary temperature distribution across the battery pack is collected from the pre-processed data, based on a historical information with respect to the initial temperature of the battery pack. Further, value of a heat flux based on the preliminary temperature distribution is determined using a convolution technique. Further, value of a heat transfer coefficient is determined for each of a plurality of battery pack - coolant intersections, based on the determined heat flux value. Further, value of a lumped conductance is determined for the battery pack, based on the determined value of the heat transfer coefficient, wherein the pre-processed data, the determined temperature distribution, the determined value of heat flux, the determined value of heat transfer coefficient, and the determined value of a lumped conductance. Further, a) the heat transfer rate between a coolant and the battery pack, and b) the value of the heat flux jump by considering an adiabatic region, are determined based on the determining and using a value of a lumped conductance, using local heat transfer coefficient calculated from battery and surface temperature on the surface of coolant channel.

In an embodiment of the method, a current temperature distribution inside the battery pack is predicted using a) the heat transfer rate between a coolant and the battery pack, and b) value of the heat flux jump.

In another embodiment, a system is provided. The system includes one or more hardware processors, a communication interface, and a memory storing a plurality of instructions. The plurality of instructions cause the one or more hardware processors to obtain a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack. Further, the obtained battery data is preprocessed, via the one or more hardware processors, to generate a pre-processed data. Further, a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, are determined, via the one or more hardware processors, wherein determining the heat transfer rate and the value of the heat flux jump includes the following steps. Initially, information on a preliminary temperature distribution across the battery pack is collected from the pre-processed data, based on a historical information with respect to the initial temperature of the battery pack. Further, value of a heat flux based on the preliminary temperature distribution is determined using a convolution technique. Further, value of a heat transfer coefficient is determined for each of a plurality of battery pack - coolant intersections, based on the determined heat flux value. Further, value of a lumped conductance is determined for the battery pack, based on the determined value of the heat transfer coefficient, wherein the pre-processed data, the determined temperature distribution, the determined value of heat flux, the determined value of heat transfer coefficient, and the determined value of a lumped conductance. Further, a) the heat transfer rate between a coolant and the battery pack, and b) the value of the heat flux jump by considering an adiabatic region, are determined based on the determining a value of a lumped conductance, using local heat transfer coefficient calculated from battery and surface temperature on the surface of coolant channel.

In an embodiment of the system, the one or more hardware processors are configured to predict a current temperature distribution inside the battery pack using a) the heat transfer rate between a coolant and the battery pack, and b) value of the heat flux jump.

In yet another aspect, a non-transitory computer readable medium is provided. The non-transitory computer readable medium includes a plurality of instructions, which when executed, cause one or more hardware processors to obtain a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack. Further, the obtained battery data is preprocessed, via the one or more hardware processors, to generate a pre-processed data. Further, a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, are determined, via the one or more hardware processors, wherein determining the heat transfer rate and the value of the heat flux jump includes the following steps. Initially, information on a preliminary temperature distribution across the battery pack is collected from the pre-processed data, based on a historical information with respect to the initial temperature of the battery pack. Further, value of a heat flux based on the preliminary temperature distribution is determined using a convolution technique. Further, value of a heat transfer coefficient is determined for each of a plurality of battery pack - coolant intersections, based on the determined heat flux value. Further, value of a lumped conductance is determined for the battery pack, based on the determined value of the heat transfer coefficient, wherein the pre-processed data, the determined temperature distribution, the determined value of heat flux, the determined value of heat transfer coefficient, and the determined value of a lumped conductance. Further, a) the heat transfer rate between a coolant and the battery pack, and b) the value of the heat flux jump by considering an adiabatic region, are determined based on the determining a value of a lumped conductance, using local heat transfer coefficient calculated from battery and surface temperature on the surface of coolant channel.

In yet another embodiment of the non-transitory computer readable medium, a current temperature distribution inside the battery pack is predicted using a) the heat transfer rate between a coolant and the battery pack, and b) value of the heat flux jump. It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for battery pack monitoring, according to some embodiments of the present disclosure.
FIG. 2 is a flow diagram depicting steps involved in the process of battery pack monitoring by the system of FIG. 1, according to some embodiments of the present disclosure.
FIG. 3 illustrates a flow diagram depicting steps involved in the process of determining heat transfer rate and value of the heat flux jump, in accordance with some embodiments of the present disclosure.
FIG. 4 is an example diagram of a battery pack with a cooling system, according to some embodiments of the present disclosure.
FIGS. 5A through 5C depict graphs depicting experimental data associated with the battery pack monitoring being performed by the system of FIG. 1, according to some embodiments of the present disclosure.
FIG. 6 illustrates an expanded version of the flow diagram in FIG. 1, in accordance with some embodiments of the present disclosure.
FIGS. 7A and 7B depict example implementations of the system of FIG. 1, in accordance with some embodiments of the present disclosure.
FIG. 8 depicts an example geometry of the battery pack that is modelled for the process of battery pack monitoring using the system of FIG. 1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

For effective monitoring of battery health, it is important that the temperature characteristics of the battery are monitored. However, in certain battery pack designs the number of batteries in the stack can be high, so sensors for measurement are unable to monitor all the batteries in the stack. Existing battery monitoring approaches fails to tackle this problem.

In order to address these challenges, embodiments disclosed herein provide a method and system for battery monitoring. The method includes obtaining a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack. Further, the obtained battery data is preprocessed to generate a pre-processed data. Further, a) a heat transfer rate between a coolant and the battery pack, wherein the heat generation rates within the battery pack are non-uniform, and b) value of a heat flux jump by considering an adiabatic region where the coolant flows through a region in which there is no heat exchange heat with the battery pack due to a serpentine geometry of the battery pack, are determined, wherein determining the heat transfer rate and the value of the heat flux jump includes the following steps. Initially, information on a preliminary temperature distribution across the battery pack is collected from the pre-processed data, based on a historical information with respect to the initial temperature of the battery pack. Further, value of a heat flux based on the preliminary temperature distribution is determined using a convolution technique. Further, value of a heat transfer coefficient is determined for each of a plurality of battery pack - coolant intersections, based on the determined heat flux value. Further, value of a lumped conductance is determined for the battery pack, based on the determined value of the heat transfer coefficient, wherein the pre-processed data, the determined temperature distribution, the determined value of heat flux, the determined value of heat transfer coefficient, and the determined value of a lumped conductance. Further, a) the heat transfer rate between a coolant and the battery pack, and b) the value of the heat flux jump by considering an adiabatic region, are determined based on the determining a value of a lumped conductance using local heat transfer coefficient calculated from battery and surface temperature on the surface of coolant channel. In an embodiment of the method, a current temperature distribution inside the battery pack is predicted using a) the heat transfer rate between a coolant and the battery pack, and b) value of the heat flux jump.

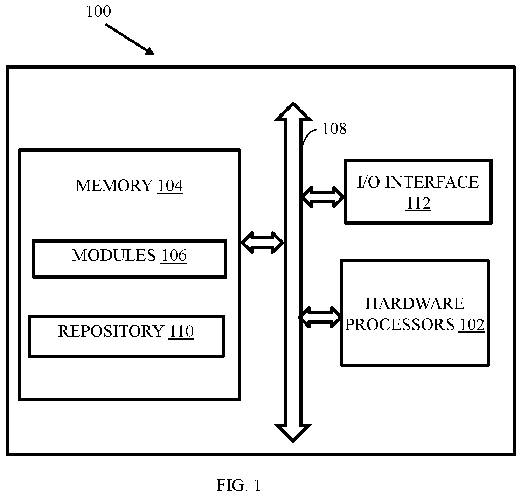

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary system for battery pack monitoring, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the battery pack monitoring, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the battery pack monitoring.

The data repository (or repository) 110 may include a plurality of abstracted piece of code for refinement and data that is processed, received, or generated as a result of the execution of the plurality of modules in the module(s) 106.

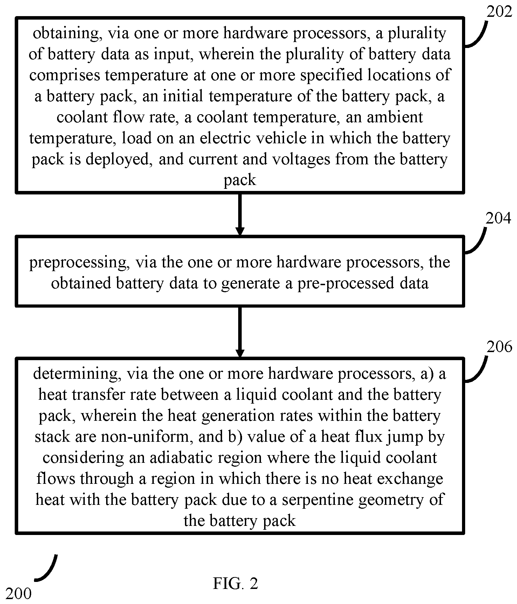

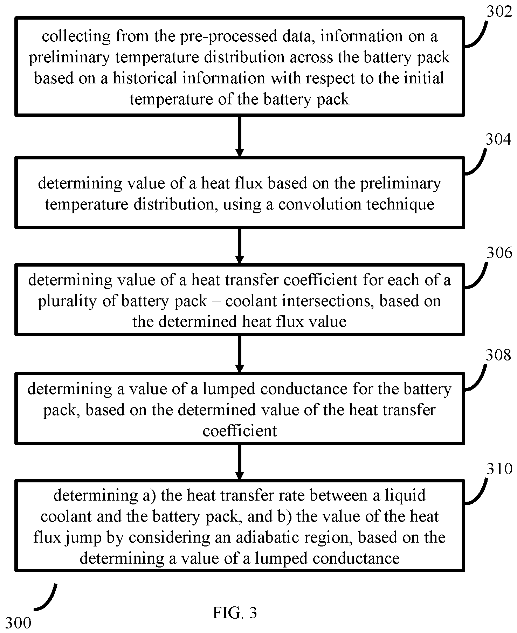

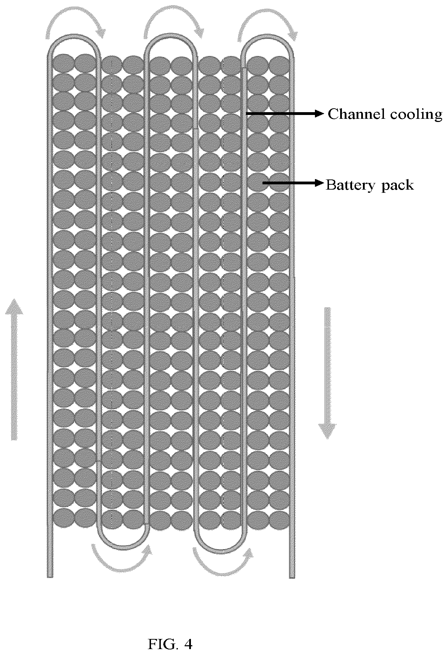

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2 and FIG. 3, and the example diagram in FIG. 4.

FIG. 2 is a flow diagram depicting steps involved in the process of battery pack monitoring by the system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 in FIG. 2, the system 100 obtains, via the one or more hardware processors 102, a plurality of battery data as input. The plurality of battery data includes temperature at one or more specified locations of a battery pack, an initial temperature of the battery pack, a coolant flow rate, a coolant temperature, an ambient temperature, load on an electric vehicle in which the battery pack is deployed, and current and voltages from the battery pack.

Further, at step 204 of the method 200, the system 100 preprocesses the obtained battery data, via the one or more hardware processors 102, to generate a pre-processed data. The preprocessing may involve conditioning the battery data to remove outliers and may also involve formatting the battery data to facilitate further processing.

Further, at step 206 of the method 200, the system 100 determines value of a) a heat transfer rate between a coolant (for example, a liquid coolant, when the flow pattern is laminar) and the battery pack, wherein the heat generation rates within the battery pack are non-uniform, and b) value of a heat flux jump by considering an adiabatic region where the liquid coolant flows through a region in which there is no heat exchange heat with the battery pack due to a serpentine geometry of the battery pack, via the one or more hardware processors 102, wherein determining the heat transfer rate and the value of the heat flux jump includes the steps as depicted in a process flow 300 in FIG. 3, and are explained hereafter.

At step 302 of the process flow 300, the system 100 initially collects information on a preliminary temperature distribution across the battery pack is collected from the pre-processed data. In an embodiment, the information on the preliminary temperature distribution across the battery pack is collected from a historical information with respect to the initial temperature of the battery pack. In an embodiment, information with respect to the preliminary temperature distribution across the battery pack (and one or more related parameters) associated with a certain past time instances of time are collected and stored as the historical information.

Further, at step 304 of the process flow 300, the system 100 determines value of a heat flux based on the preliminary temperature distribution, using a convolution technique. In the convolution technique, the heat flux at a given location x* is obtained as:

$$q_s''(x^*) = \left(-\frac{k}{W}\right) \left\{ \int_0^{x^*} \left[ -4 \sum_{n=0}^{\infty} G_n \exp\left[ -\frac{32\lambda_n^2}{3}(x^* - \xi^*) \right] \right] \left(\frac{dT_s}{dx^*}\right) d\xi^* - \right.$$

$$\left. 4\left(T_s - T_{in}\right)_{x^*=0} \sum_{n=0}^{\infty} G_n \exp\left(-\frac{32\lambda_n^2}{3} x^*\right) \right\} \qquad \text{--- (1)}$$

$$G_n = -\frac{1}{2} C_n \left(\frac{\partial R_n}{\partial y^*}\right)_{y^*=1} \qquad \text{--- (2)}$$

Here, x* is the non-dimensional distance from the inlet. x is the non-dimensional distance from a position in the channel downstream where the effects of wall temperature change is felt given by:

$$x^* = \frac{x}{D_h Re Pr} \qquad \text{--- (3)}$$

Here x is the dimensional distance from the inlet to a current element, $D_h$ is the hydraulic diameter of the channel, *Re* is the Reynolds number = $D_h$*density-liquid*average-fluid-velocity/fluid-viscosity of the fluid, *Pr* is Prandtl number of the fluid given fluid-specific-heat*fluid-viscosity/fluid-thermal-conductivity, k is thermal conductivity of the fluid, W is width of the channel, $T_s$ is the surface temperature on the coolant channel element, $T_{in}$ is the inlet fluid temperature. $\xi^*$ is the non-dimensional distance from the element upstream of the channel to the current location. $G_n$, $\lambda_n$ are constants. The integral in the above equation is discretized and the first 10 terms of the infinite series are evaluated. This approach is adapted to the problem of battery pack monitoring, wherein the battery pack has several cylindrical batteries that are placed in a row (for example, in the order of 24) next to the coolant channel. The temperature profile in the channel surface is assumed to be piecewise constant. The lumped conductance between a battery core temperature and an elastomer surface temperature is calculated as a function of fluid side heat transfer coefficient, using a computational fluid dynamics solution. A lumped conductance between each of the batteries and the coolant surface is a weak function of the fluid side heat transfer coefficient. Since the fluid side heat transfer coefficient is unknown and needs to be calculated using the convolution approach, an initial guess from the available heat transfer coefficients can be used for calculating the lumped conductance.

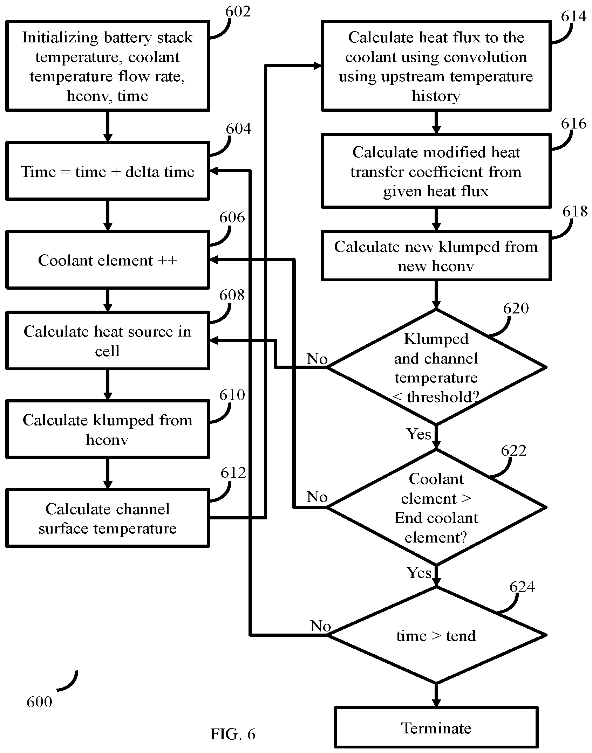

An algorithm of the convolution technique is given below and a corresponding flow diagram representation is in FIG. 6, in which steps 602 through 624 depict sequence of steps involved in convolution algorithm (these reference numerals are not explicitly referred to, in the description provided herein):

1. Initialize battery temperature and coolant flow rate at time = 0

2. For time > 0 until $t_{end}$:

3. First time step

4. First cell from inlet

5. Calculate heat source in first battery

6. Initialize $k_{lumped}$ from available $h_{conv}$ at that location

7. Calculate $T_{coolant}$ surface from mean fluid and $T_{battery}$ temperature from heat source

8. Use convolution technique to get the heat flux based on inlet coolant and heat source

9. Recalculate modified $h_{conv}$ = heatflux/($T_{surfaceavg}$- $T_{mean}$)/Area

10. Recalculate $k_{lumped}$(modified $h_{conv}$)

11. If ($k_{lumpednew}$ - $k_{lumpedold}$) < threshold and ($T_{surfaceavgnew}$ − $T_{surfacavgeold}$) < threshold or current timestep > maximum iterations per time step move to step 4 for next cell

12. Else repeat step 5 to step 11

Where, $k_{lumped}$ is the lumped conductance calculated from $h_{conv}$ vs $k_{lumped}$ graph. $h_{conv}$ is the convection heat transfer coefficient that is given by heat-flux = $h_{conv}$ *A*($T_{surface}$ - $T_{mean}$) where A is the surface area of the coolant channel in contact with battery, $T_{surface}$ is the average temperature at the coolant channel surface, $T_{mean}$ is the mean fluid temperature on that coolant element, $k_{lumped}$ is effective heat transfer conductance, and is calculated as:

$$k_{lumped} = \frac{h_{conv}A\left(T_{sur\,avg} - T_{fluid}\right)}{\left(T_{battery_{max}} - T_{sur\,avg}\right)} \qquad \text{--- (4)}$$

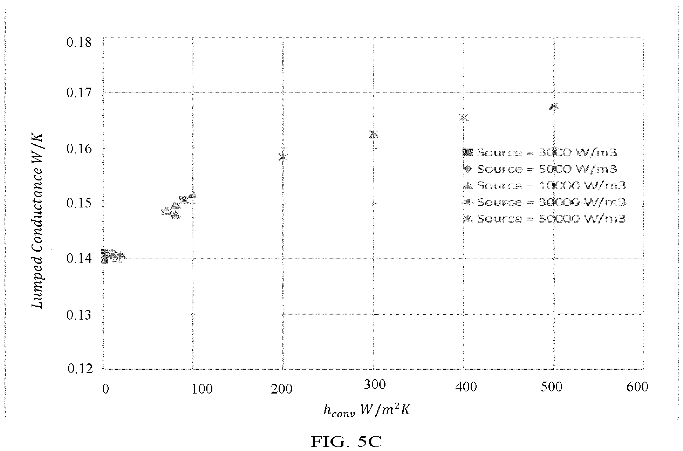

where, A is the surface of the elastomer, $T_{sur_{avg}}$ is the area average temperature on the elastomer surface, $T_{fluid}$ is the assumed fluid The plot of $k_{lumped}$ and $h_{conv}$ *is* provided in FIG. 5C.

In this approach, at the beginning, values of battery pack initial temperatures, coolant temperatures and flow rates are obtained from a source, wherein the source maybe the historical information and/or any other source. Further, starting from a first battery in the battery pack, with the obtained values of heat transfer coefficient and the temperatures, the system 100 solves a plurality of energy conservation equations for the battery and the elastomer for a given heat flux generation provided to the battery and a lumped conductance value calculated based on a fluid side heat transfer coefficient for a battery-elastomer assembly. An elastomer temperature determined is assumed to be close to the surface temperature of the coolant surface. Depending on the algorithm for calculating the heat flux on the fluid side, a coupling between $k_{lumped}$ and heat transfer coefficient on fluid side can be calculated or not. For example when the heat generation in the battery pack is uniform, it is found sufficient to calculate the heat transfer coefficient on the fluid side as function of hydrodynamic conditions only, in that case the heat transfer coefficient at the fluid side does not change depending on the temperature distribution on the channel wall. In that case the lumped conductance in the fluid side is not required to be recalculated. In cases where there is a non-uniform heat generation within the batteries, the convolution technique is used for recalculating the heat flux and the resulting $h_{conv}$, in turn leading to recursion in calculating the $k_{lumped}$. Once the battery temperature is determined within a provided tolerance along with tolerances between $k_{lumped}$ calculated from the recursion, the aforementioned steps are repeated for next battery in the battery pack. The procedure is repeated for all time steps on which the battery temperature history is desired.

Further, at step 306 of the process flow 300, the system 100 determines value of the heat transfer coefficient for each of a plurality of battery pack - coolant intersections, based on the determined heat flux value. In an embodiment, a change in the heat transfer rate in comparison with the obtained value of heat transfer rate is determined. The initial guess for the heat transfer coefficient ate is determined using any suitable technique, for example, a fluid side Reynolds number and Prandtl number. For example, a developing flow Nusselt number coefficient is obtained as:

$$N_{u_{Dh}} = \begin{cases} 1.233(x^*)^{-\frac{1}{3}} + 0.4, & x^* \leq 0.001 \\ 7.541 + 6.874(10^3 x^*)^{-0.488} exp(-245 x^*) & x^* > 0.001 \end{cases}$$

$$--- (5)$$

x* is the nondimensional distance from the inlet given by:

$$x^* = \frac{x}{D_h Re Pr}$$

$$--- (6)$$

$D_h$ is the hydraulic diameter of the channel, Re is the Reynolds number and $Pr$ is the Prandtl number of the fluid

$$N_{u_{Dh}} = h_{conv} * \frac{D_h}{k}$$

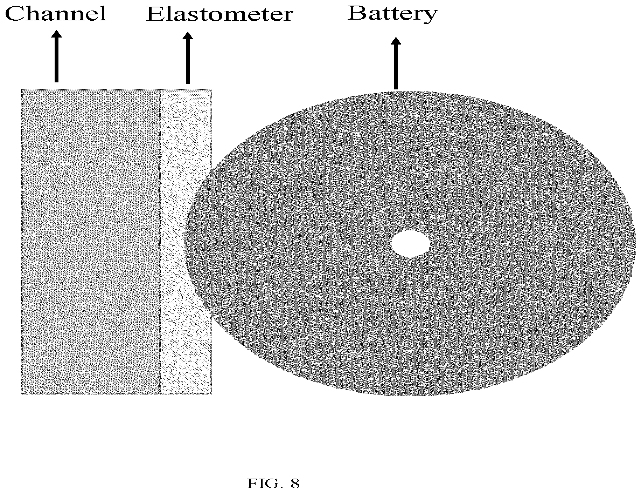

Further, at step 308 of the process flow 300, value of a lumped conductance is determined for the battery pack, based on the determined value of the heat transfer coefficient. The system 100 determines the value of the lumped conductance using computational fluid dynamics (CFD) simulations are used. For example, FIG. 8 shows geometry of the battery pack that is modeled using the CFD, which is a detailed view of the example diagram of the battery pack with the cooling system as depicted in FIG. 4. As in FIG. 8, the battery stack incudes a cylindrical battery (for example, a A123 battery). The elastomer is placed next to the battery, and the coolant flow is assumed to be on the left side of the elastomer. The thermal properties of the battery and elastomer are provided to the CFD simulation. The system 100 deduces the lumped conductance (1/Ru) is a weak function of the heat transfer coefficient on the fluid side. The system 100 derives the lumped conductance of the battery elastomer assembly at a steady state with an assumed heat transfer coefficient on the wall left of the elastomer-battery assembly where the coolant is assumed to flow for a given heat constant source inside the battery. As battery load is varying with time, the validity of the shape factor needs to be tested using unsteady runs. The lumped capacitance changes during the load change was observed to be quite small (not shown in figures). The calculated lumped conductance value along with its relationship with respect to fluid side hydrodynamic conditions along with the load profile in the battery can be used to calculate a battery core temperature history as battery pack undergoes charge-discharge. A plot of the lumped conductance change as a function of fluid side heat transfer coefficient is shown in FIG. 5C. This methodology could be used for several battery elastomer dimensions and for wavy channel instead of a straight channel that carries the coolant.

Further, at step 310 of the process flow 300, the system 100 determines a) the heat transfer rate between a liquid coolant and the battery pack, and b) the value of the heat flux jump by considering an adiabatic region, based on the determined value of the lumped conductance. In an embodiment of the method, a current temperature distribution inside the battery pack is predicted using a) the heat transfer rate between a liquid coolant and the battery pack, and b) value of the heat flux jump.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of battery pack monitoring. The embodiment, thus provides a mechanism for determining a lumped conductance value for a batter stack. Moreover, the embodiments herein further provide a mechanism for determining a temperature distribution across the battery pack, based on the determined lumped conductance value.

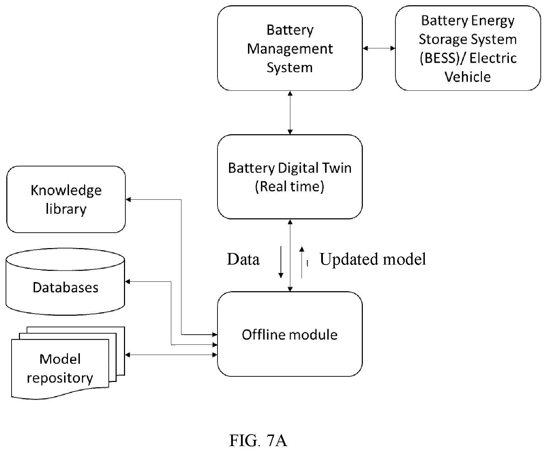

An example implementation of the system 100 of FIG. 1 is depicted in FIG. 7A. The implementation diagram in FIG. 7A showcases various components of the system 100 that consist of both hardware and software. The system 100 as in FIG. 7A comprises an on-premises Battery Digital Twin (BDT) linked to Battery Management System (BMS) associated with either a Battery Energy Storage System (BESS) or a Battery Pack in an Electric Vehicle (EV) and an Offline module.

Battery Digital Twin acquires data from the BESS/EV pack via BMS and provides real time recommendation to achieve optimal performance. The data may include information related to voltage, current, surface temperature, resting period, etc., obtained from sensors/SCADA/DCS system associated with EV/BESS. The Battery Digital Twin utilizes computationally lightweight models to provide real time recommendation to BMS. These models are periodically updated through the Offline module. The Offline module uses customized physics-based models or PBM of cells used in BESS/EV to simulate the performance of cell at different operating conditions. The simulated data obtained from PBM model along with the pre-processed data from BDT is used by the Data Analytics Platform (e.g., TCS InTwin™) to build or update computationally light weight models. These models can be either machine learning based models or reduced order models. The Offline module utilizes information from Knowledge Library, Databases and Model repository for building physics-based model as well as in Data Analytics Platform. A Knowledge Library contains information regarding various parameters used for physics-based battery models that is obtained from literature, experiments, API, etc. Database on the other hand contains sensor data obtained from BMS. A Model repository consists of various types of physics-based models that can be used for modeling different physical, chemical, electrochemical, thermal mechanisms inside a battery.

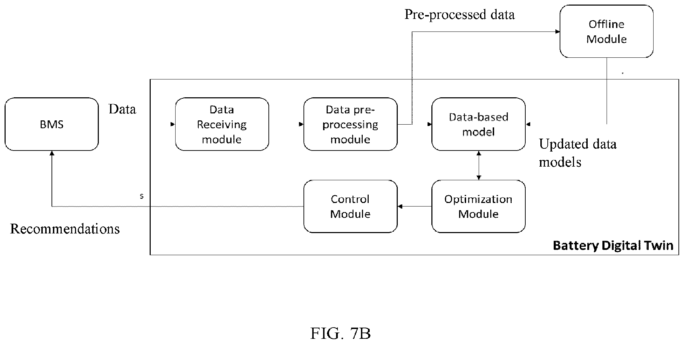

Sub-systems of the Battery Digital Twin are depicted in FIG. 7B. The BMS data is received by a Data Receiving module which then directs data towards a Data Pre-processing module. Data preprocessing involves detecting and eliminating outliers, filling in missing data, and harmonizing and incorporating multiple variables from one or more data origins. The data collected from different sources can be standardized, such as being uniformly sampled every minute. Real-time data is appropriately averaged, while non-real-time data is either interpolated or duplicated as needed. The pre-processed data is then directed to be used by the Data-based model to predict state variables such as State-of-Charge, State-of-health, etc. The Data-based models can be Reduced order models or machine learning models. The Data-based model is computationally inexpensive and can run in real time. This Data-based model is linked to the Optimization module that is used to determine optimal operating conditions to ensure longer cell life and safe operation. Based on the optimal conditions obtained from the optimization module, a control module provides feedback to the BMS. The Data-based model is updated periodically by the Offline Simulation module. As shown in FIG. 7B, the Offline simulation module receives the pre-processed data from Battery Digital Twin. It then uses the data to build and update the Data-based model.

Simulation Data:

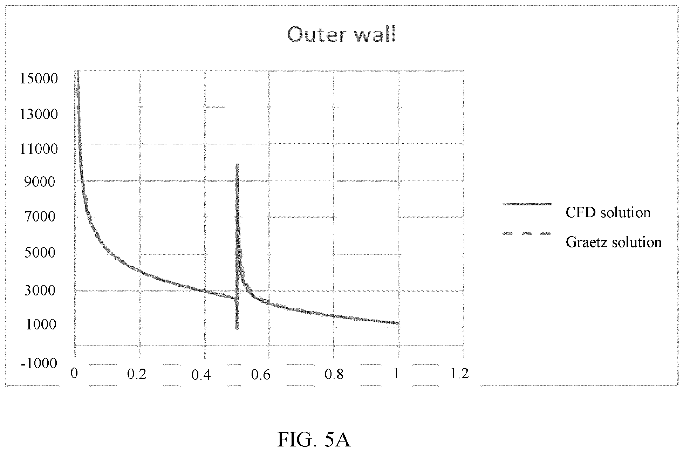

To validate the approach in method 200, the formulation was checked against 2D-CFD solution in Fluent. The width of the channel simulated was 4 mm and an inlet fluid temperature of 300K, a wall temperature varying from 310 K from the inlet to 315 K at the outlet linearly, and the length of the channel is 0.5 m. Water was used as the working fluid, and a velocity of 0.05 m/s at the inlet was used. The 2D mesh consisted of 10 cells along with the width of the channel and 140 cells along the length with a total of 1400 cells. The mesh was refined near the inlet to capture the developing flow with an aspect ratio close to 1 near the inlet. A comparison between series solution with 200 divisions along the pipe length of 0.5 m for integration with Fluent CFD solution is depicted in FIG. 5A.

Calculation of wall temperature in the curved regions of a serpentine channel on which the coolant does not exchange heat with the battery stack is explained hereafter. The coolant channel was exposed to air or inert material. When the coolant after exchanging heat with the battery flows through this channel, the heat flux it gets from adjacent space could be assumed to be negligible and as adiabatic. When the coolant travels through this section, the thermal boundary layer develops in the channel with the temperature in the center of the channel increasing and close the walls decreasing due to heat transfer in the fluid or vice versa. Due to this phenomenon, when the coolant comes back into contact with battery, there is an increased heat flux intake or output from or to the battery. This heat flux increase is compared with the heat flux that would exist if the fluid continued to exchange heat without the adiabatic portion.

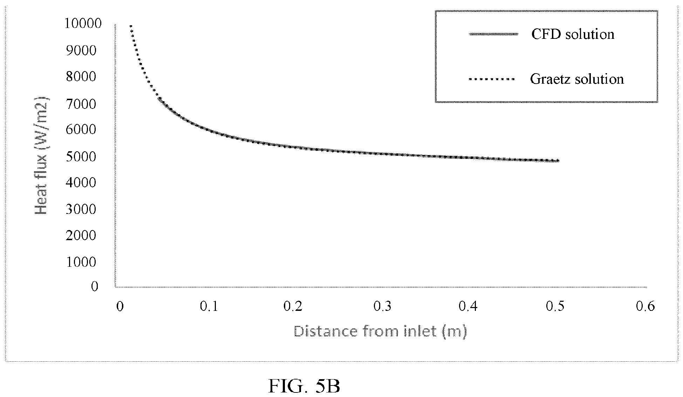

The heat flux increase when compared to a heat flux calculated without a bend for a test geometry, the heat flux jump was seen both on inner and outer wall, and Fluent CFD has been used for high fidelity runs constant wall temperature of 310 K in the straight region and adiabatic wall in the curved region. The heat flux was calculated using Shah correlation assuming a flow without a bend channel. As it can be seen the Fluent CFD solution sees an increase heat flux after the bend and settles down heat flux from Shah correlation downstream. To calculate the change in the heat flux the convolution technique was used. The coolant channel in the curved region was split into smaller elements along the flow direction. In the convolution technique the heat flux at a given location was calculated for a given wall temperature, whereas, given that the heat flux is close to zero, the wall heat flux was set to 0 and the corresponding wall temperature was calculated. The procedure was repeated until the end of the curved after which the coolant channel elements exchange heat with the battery element. The result of the simulation was compared with convolution technique as in FIG. 5B. It was observed that the heat flux increase was captured for most of the portion after the bend.

A temperature profile in the adiabatic region was calculated as:

$$q_s''(x^*) = \left(-\frac{k}{W}\right) \left\{ \int_0^{x^*} \left[-4 \sum_{n=0}^{\infty} G_n \exp\left[-\frac{32\lambda_n^2}{3}(x^* - \xi^*)\right]\right] \left(\frac{dT_s}{dx^*}\right) d\xi^* - \right.$$

$$\left. 4\,(T_s - T_{in})_{x^*=0} \sum_{n=0}^{\infty} G_n \exp\left(-\frac{32\lambda_n^2}{3}\,x^*\right)\right\} = 0 \qquad --- (7)$$

The adiabatic channel was discretized into smaller lengths that was assumed to be an element with constant temperature. The heat flux in the adiabatic region in each of the element was set to 0. The temperature upstream of the first element in the curved region of the serpentine channel was known, as it is an element that is adjacent to a battery and is calculated using the algorithm defined earlier. The term $\frac{dT_s}{dx^*}$ from the right-hand side is the derivative of the wall temperature term is calculated and from the derivative the wall temperature is at that element is calculated using the temperature upstream and the derivative. The process repeats itself for the second element in the serpentine channel until it reached the last element in the adiabatic region. After that the next wall element exchanges heat with the battery and the heat flux is calculated as usual with the convolution technique now with the temperature history in the adiabatic wall included in the calculation. The jump in heat flux due to the adiabatic wall is reported in the picture above. Here a first order explicit scheme for calculating the wall temperature that is $T_{wallelement} = T_{wallupstream} + (dTs/dx^*)^*dx^*$ is used, but it could be extended to higher order schemes for heat flux calculation.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:
   obtaining (202), via one or more hardware processors, a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack;

   preprocessing (204), via the one or more hardware processors, the obtained battery data to generate a pre-processed data; and
   determining (206), via the one or more hardware processors, a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, wherein determining the heat transfer rate and the value of the heat flux jump comprises:

      collecting (302) from the pre-processed data, information on a preliminary temperature distribution across the battery pack based on a historical information with respect to the initial temperature of the battery pack;
      determining (304) value of a heat flux based on the preliminary temperature distribution, using a convolution technique;
      determining (306) value of a heat transfer coefficient for each of a plurality of battery pack - coolant intersections, based on the determined heat flux value;
      determining (308) a value of a lumped conductance for the battery pack, based on the determined value of the heat transfer coefficient; and
      determining (310) a) the heat transfer rate between a coolant and the battery pack, and b) the value of the heat flux jump by considering an adiabatic region, based on the determining a value of a lumped conductance.

2. The method as claimed in claim 1, comprising predicting a current temperature distribution inside the battery pack using a) the heat transfer rate between a coolant and the battery pack, and b) value of the heat flux jump.

3. A system (100), comprising:

   one or more hardware processors (102);
   a communication interface (112); and
   a memory (104) storing a plurality of instructions, wherein the plurality of instructions cause the one or more hardware processors to:

      obtain a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack;
      preprocess the obtained battery data to generate a pre-processed data; and
      determine a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, wherein determining the heat transfer rate and the value of the heat flux jump comprises:

         collecting from the pre-processed data, information on a preliminary temperature distribution across the battery pack based on a historical information with respect to the initial temperature of the battery pack;
         determining value of a heat flux based on the preliminary temperature distribution, using a convolution technique;
         determining value of a heat transfer coefficient for each of a plurality of battery pack - coolant intersections, based on the determined heat flux value;
         determining a value of a lumped conductance for the battery pack, based on the determined value of the heat transfer coefficient, wherein the pre-processed data, the determined temperature distribution, the determined value of heat flux, the determined value of heat transfer coefficient, and the determined value of a lumped conductance; and

determining a) the heat transfer rate between a coolant and the battery pack, and b) the value of the heat flux jump by considering an adiabatic region, based on the determining a value of a lumped conductance.

4. The system as claimed in claim 3, wherein the one or more hardware processors are configured to predict a current temperature distribution inside the battery pack using a) the heat transfer rate between a coolant and the battery pack, and b) value of the heat flux jump.

5. One or more non-transitory machine-readable information storage mediums comprising one or more instructions which when executed by one or more hardware processors cause:

obtaining a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack;
preprocessing the obtained battery data to generate a pre-processed data; and
determining a) a heat transfer rate between a coolant and the battery pack, wherein the heat generation rates within the battery pack are non-uniform, and b) value of a heat flux jump by considering an adiabatic region where the coolant flows through a region in which there is no heat exchange with the battery pack due to a serpentine geometry of the battery pack, wherein determining the heat transfer rate and the value of the heat flux jump comprises:

collecting, from the pre-processed data, information on a preliminary temperature distribution across the battery pack based on a historical information with respect to the initial temperature of the battery pack;
determining value of a heat flux based on the preliminary temperature distribution, using a convolution technique;
determining value of a heat transfer coefficient for each of a plurality of battery pack - coolant intersections, based on the determined heat flux value;
determining a value of a lumped conductance for the battery pack, based on the determined value of the heat transfer coefficient; and
determining a) the heat transfer rate between a coolant and the battery pack, and b) the value of the heat flux jump by considering an adiabatic region, based on the determining a value of a lumped conductance.

6. The one or more non-transitory machine-readable information storage mediums as claimed in claim 5, wherein the one or more instructions which when executed by the one or more hardware processors cause predicting a current temperature distribution inside the battery pack using a) the heat transfer rate between a coolant and the battery pack, and b) value of the heat flux jump.

100

FIG. 1

202

obtaining, via one or more hardware processors, a plurality of battery data as input, wherein the plurality of battery data comprises temperature at one or more specified locations of a battery pack, an initial temperature of the battery pack, a coolant flow rate, a coolant temperature, an ambient temperature, load on an electric vehicle in which the battery pack is deployed, and current and voltages from the battery pack

204

preprocessing, via the one or more hardware processors, the obtained battery data to generate a pre-processed data

206

determining, via the one or more hardware processors, a) a heat transfer rate between a liquid coolant and the battery pack, wherein the heat generation rates within the battery stack are non-uniform, and b) value of a heat flux jump by considering an adiabatic region where the liquid coolant flows through a region in which there is no heat exchange heat with the battery pack due to a serpentine geometry of the battery pack

200

FIG. 2

collecting from the pre-processed data, information on a preliminary temperature distribution across the battery pack based on a historical information with respect to the initial temperature of the battery pack

302

determining value of a heat flux based on the preliminary temperature distribution, using a convolution technique

304

determining value of a heat transfer coefficient for each of a plurality of battery pack – coolant intersections, based on the determined heat flux value

306

determining a value of a lumped conductance for the battery pack, based on the determined value of the heat transfer coefficient

308

determining a) the heat transfer rate between a liquid coolant and the battery pack, and b) the value of the heat flux jump by considering an adiabatic region, based on the determining a value of a lumped conductance

310

300

FIG. 3

Channel cooling

Battery pack

FIG. 4

FIG. 5A

FIG. 5B

EP 4 550 521 A2

FIG. 5C

19

602

Initializing battery stack
temperature, coolant
temperature flow rate,
hconv, time

604

Time = time + delta time

606

Coolant element ++

608

Calculate heat source in
cell

610

Calculate klumped from
hconv

612

Calculate channel
surface temperature

614

Calculate heat flux to the
coolant using convolution
using upstream temperature
history

616

Calculate modified heat
transfer coefficient from
given heat flux

618

Calculate new klumped from
new hconv

620

Klumped
and channel
temperature
< threshold?

No

Yes

622

Coolant
element >
End coolant
element?

No

Yes

624

time > tend

No

Terminate

600

FIG. 6

FIG. 7A

FIG. 7B

Channel     Elastometer     Battery

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321075179